# EUROPEAN PATENT APPLICATION

(11) **EP 1 870 778 A2**
(43) Date of publication of application: **26.12.2007**
(21) Application number: 06121140.5
(22) Date of filing: 22.09.2006
(51) Int. Cl.: G03G 15/00, B41J 29/393

(54) **Diagnosing an image forming apparatus**

(30) Priority: 27.09.2005 KR 20050090094
(71) Applicant: SAMSUNG ELECTRONICS CO., LTD., Suwon-si Gyeonggi-do 442-742 (KR)
(72) Inventor: Lee, Sang-jin, Suwon-si Gyeonggi-do (KR)
(74) Representative: Walaski, Jan Filip

(57) **Abstract**

An image forming apparatus, a system and a method in which information relating to the maintenance of the image forming apparatus is communicated using radio frequency identification (RFID) communications are provided. The system includes a diagnosis device which includes an RFID tag, stores a diagnosis instruction into the RFID tag, and receives a diagnosis result, an RFID tag is attached to the image forming apparatus. The system also includes an RFID reader which is placed in the image forming apparatus, reads the diagnosis instruction from the RFID tag of the diagnosis device, and sends and receives diagnosis information by recognizing the RFID tag of the diagnosis device. A controller is provided to perform the diagnosis instruction received by the RFID reader and send the diagnosis result to the RFID reader. Accordingly, an additional port for the diagnosis function is not required, and diagnosis can be performed by connecting the image forming apparatus with a diagnosis device even when the image forming apparatus is operating.

## Description

The present invention relates to an image forming apparatus. More particularly, the present invention relates to an image forming apparatus, a system and a method in which diagnosis information relating to the image forming apparatus is communicated using radio frequency identification (RFID) tags and readers.

Network printers or server printers have to maintain operating conditions all the time since they are connected with several terminals. A diagnosis device may be connected to these printers for maintenance or fault diagnosis. Generally, the diagnosis device is connected to the printers by using an additional port or existing USB ports or print ports.

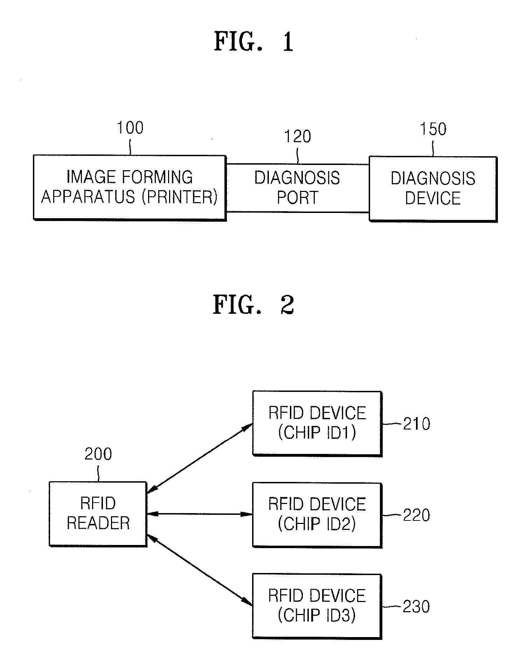

Figure 1 shows an image forming apparatus such as a printer 100 connected to a diagnosis device 150. The diagnosis device 150 sends an instruction for reading information on a printer state or for performing specific operations. The diagnosis device 150 and the printer 100 communicate with each other through a communication port 120. An instruction for reading information on an operation state of the printer 100, information as to any changes in sensors, and information as to the lifespan of the printer 100, or an instruction for performing a specific operation may be sent to the printer 100. The communication port is generally used for maintenance or fault diagnosis of the printer 100, and can be a dedicated port for diagnosis or existing USB or printer ports.

In the aforementioned diagnosis system, the printer 100 is connected with the diagnosis device 150 by using a specific port. To do so, the network printer 100 or the server printer 100 stops its operation, is then connected with the diagnosis device 150, and then starts its operation again. Such a connection requires a long time to be setup. Furthermore, when the dedicated port is used, the hardware cost increases due to the dedicated port, whereas when the USB port or the print port is used, the printer 100 cannot be used when a diagnosis operation is performed. Also, the printer 100 cannot be used while the diagnosis device 150 is being connected with the printer 100. Further, if the printer 100 is performing another job, the diagnosis operation cannot be performed until the job is completed. Accordingly, there is a need for an improved image forming apparatus having a diagnosis function, a diagnosis system and a diagnosis method, particularly an apparatus, system and method using RFID.

Exemplary embodiments of the present invention address at least the above problems and/or disadvantages and provide at least the advantages described below.

Accordingly, an aspect of the present invention is to provide an image forming apparatus having a diagnosis function using RFID, and a diagnosis system and method therefor, in which the image forming apparatus does not require an additional port for the diagnosis function, and diagnosis can be performed by communication of the image forming apparatus with a diagnosis device even when the image forming apparatus is operating, thereby allowing a user to conveniently perform a maintenance operation for the image forming apparatus.

According to an aspect of the present invention, there is provided a method of diagnosing an image forming apparatus, wherein the image forming apparatus, including at least one of an RFID tag and an RFID reader, communicates with a diagnosis device including at least one RFID tag through RFID communication. According to another aspect of the present invention, there is provided a method of diagnosing an image forming apparatus, comprising reading a diagnosis instruction from an RFID tag of a diagnosis device via an RFID reader placed in the image forming apparatus, diagnosing the image forming apparatus using the read diagnosis instruction and sending a diagnosis result to the diagnosis device through RFID communication.

In the aforementioned aspect of the present invention, the reading operation may further comprise checking whether the diagnosis device including the RFID tag is within the receiving range via the RFID reader placed in the image forming apparatus.

In addition, in the diagnosing operation, if the diagnosis instruction is related to an RFID device including its RFID tag, the RFID device may be diagnosed, and the RFID reader placed in the image forming apparatus may read the diagnosis result. In addition, the RFID device including the RFID tag may be a component device of the image forming apparatus.

According to another aspect of the present invention, there is provided a method of diagnosing an image forming apparatus, comprising recognizing an RFID tag of the image forming apparatus through RFID communication by a first RFID reader, storing a diagnosis instruction into the recognized RFID tag by the first RFID reader and diagnosing the image forming apparatus using the diagnosis instruction when a second RFID reader reads the diagnosis instruction stored in the recognized RFID tag, wherein the RFID communication is a series of operations through which the RFID reader reads data stored in the RFID tag or writes the data to the RFID tag, whereas the RFID readers included in the diagnosis device and the image forming apparatus are referred to as the first RFID reader and the second RFID reader, respectively.

In the aforementioned aspect of the present invention, the RFID tag of the image forming apparatus may be attached to the RFID device included in the image forming apparatus.

In addition, the method may further comprise storing a diagnosis result of the image forming apparatus into the RFID tag of the image forming apparatus by the second RFID reader and reading the diagnosis result of the image forming apparatus from the RFID tag of the image forming apparatus by the first RFID reader.

In addition, the RFID tag of the image forming apparatus may be attached to the RFID device placed in the image forming apparatus.

According to another aspect of the present invention, there is provided a diagnosis system for an image forming apparatus, comprising a diagnosis device which includes an RFID tag, stores a diagnosis instruction in the RFID tag, and receives a diagnosis result; an RFID tag attached to the image forming apparatus, an RFID reader which is placed in the image forming apparatus, reads the diagnosis instruction from the RFID tag of the diagnosis device, and sends and receives diagnosis information by recognizing the RFID tag of the diagnosis device, and a controller which performs the diagnosis instruction received by the RFID reader and sends the diagnosis result to the RFID reader.

In the aforementioned aspect of the present invention, the RFID tag may be attached to the RFID device included in the image forming apparatus.
In addition, the RFID reader may send an initializing instruction to the RFID device including its RFID tag, receive a chip ID from the RFID device to recognize the RFID device, send an instruction for selecting the RFID device and an instruction to be executed by the RFID device along with the chip ID, and read a result obtained by executing the instructions. See summary of the invention In addition, the RFID tag may be attached to the RFID device placed in the image forming apparatus.

According to another aspect of the present invention, there is provided a diagnosis system for an image forming apparatus, comprising an RFID tag which is attached to the image forming apparatus and stores diagnosis information of the image forming apparatus, a diagnosis device which includes a first RFID reader, recognizes the RFID tag of the image forming apparatus to read the diagnosis information stored in the recognized RFID tag, and stores a diagnosis instruction into the recognized RFID tag, a second RFID reader placed in the image forming apparatus and a controller which stores the diagnosis information of the image forming apparatus into the RFID tag of the image forming apparatus using the second RFID reader, and stores a result obtained by executing the diagnosis instruction, which is stored in the RFID tag of the image forming apparatus by the diagnosis device, into the RFID tag using the second RFID reader.

In the aforementioned aspect of the present invention, the RFID tag may be attached to the RFID device included in the image forming apparatus.

According to another aspect of the present invention, there is provided an image forming apparatus having a diagnosis function using RFID, comprising a first RFID tag, an RFID reader which reads a diagnosis instruction from an RFID tag of a diagnosis device, when the diagnosis device stores the diagnosis instruction into the RFID tag and receives a result obtained by executing the diagnosis instruction, and sends or receives diagnosis information by recognizing the first RFID tag and a controller which performs the diagnosis instruction received by the RFID reader and sends the diagnosis result to the RFID reader.

In the aforementioned aspect of the present invention, the RFID tag may be attached to the RFID device included in the image forming apparatus.
In addition, the RFID device including the RFID tag may be a component device of the image forming apparatus.

According to another aspect of the present invention, there is provided an image forming apparatus having a diagnosis function using an RFID, comprising an RFID tag storing diagnosis information of the image forming apparatus a first RFID reader reading and writing diagnosis data from and to the RFID tag and a controller which stores the diagnosis information of the image forming apparatus into the RFID tag of the image forming apparatus using the first RFID reader, while a diagnosis device reads the diagnosis information stored in the RFID tag by recognizing the RFID tag of the image forming apparatus and stores an diagnosis instruction into the RFID tag, and in which the diagnosis device reads the diagnosis instruction stored in the RFID tag of the image forming apparatus, executes the diagnosis instruction, and stores an execution result into the RFID tag via the first RFID reader.

In the aforementioned aspect of the present invention, the RFID tag may be attached to the RFID device included in the image forming apparatus.

Embodiments of the invention will now be described, by way of example, with reference to the accompanying drawings, in which:
Figure 1 shows an exemplary image forming apparatus such as a printer connected to a diagnosis device;
Figure 2 shows an exemplary RFID reader and RFID devices connected to the RFID reader;
Figure 3 is an exemplary flowchart illustrating how the RFID reader of Figure 2 recognizes the RFID devices connected thereto;
Figure 4 is an exemplary flowchart illustrating how the RFID reader of Figure 2 and the RFID devices operate;
Figure 5 is a block diagram of a configuration of a diagnosis system for an image forming apparatus, according to an exemplary embodiment of the present invention;
Figure 6 is a flowchart of a method of diagnosing an image forming apparatus according to an exemplary embodiment of the present invention;
Figure 7 is a block diagram of a configuration of a diagnosis system for an image forming apparatus, according to another exemplary embodiment of the present invention;
Figure 8 is a flowchart of a diagnosis method for an image forming apparatus, according to another exemplary embodiment of the present invention;
Figure 9 is an exemplary flowchart illustrating how a diagnosis device recognizes an RFID device placed in a printer and receives printer information; and
Figure 10 is an exemplary flowchart illustrating how a diagnosis device stores information on diagnosis operations into an RFID device placed in a printer and how the printer receives the information and performs corresponding operations.

Throughout the drawings, the same drawing reference numerals will be understood to refer to the same elements, features, and structures.

The matters defined in the description such as a detailed construction and elements are provided to assist in a comprehensive understanding of the embodiments of the invention and are merely exemplary. Accordingly, those of ordinary skill in the art will recognize that various changes and modifications of the embodiments described herein can be made without departing from the scope of the invention. Also, descriptions of well-known functions and constructions are omitted for clarity and conciseness.

Hereinafter, an image forming apparatus using radio frequency identification (RFID), and a diagnosis system and method therefor according to the present invention will be described in detail by explaining exemplary embodiments of the invention with reference to the attached drawings.

According to a method of diagnosing an image forming apparatus including an RFID tag and an RFID reader, a diagnosis device diagnoses the image forming apparatus through RFID communication. In this description, the RFID communication means a series of operations through which the RFID reader reads data stored in the RFID tag or writes the data to the RFID tag.

Figure 2 shows an RFID reader 200 and RFID devices 210, 220, and 230 connected to the RFID reader 200. Generally, an RFID reader for wireless communication is connected to a plurality of RFID devices including RFID tags. The RFID reader 200 is connected to a plurality of the RFID devices 210, 220, and 230 to communicate with each other. A printer usually includes an RFID reader to manage consumable devices such as a toner cartridge and an organic photo conductor (OPC) drum. Each of the consumable devices includes an RFID tag having a memory. Information for managing the consumable devices (in other words, usage information) is stored in each memory.

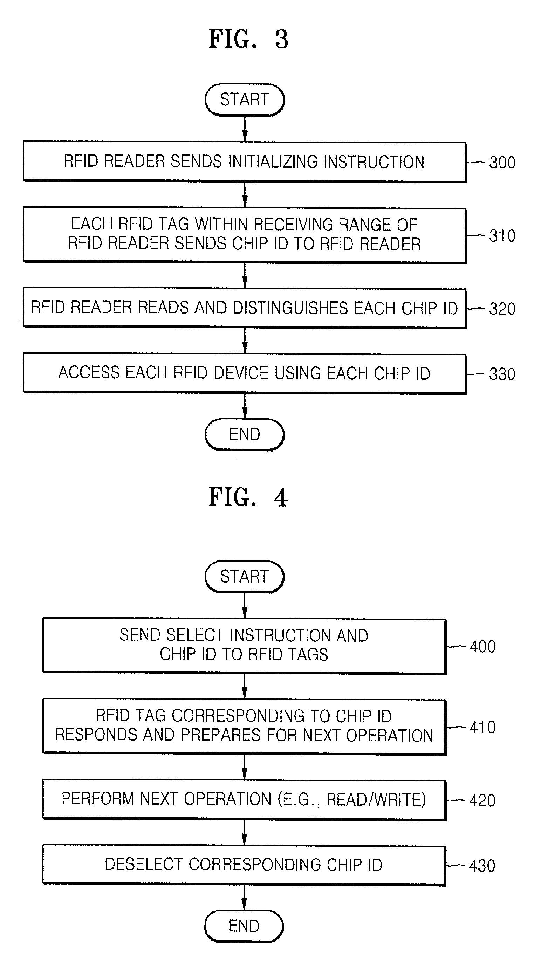

Figure 3 is a flowchart illustrating how the RFID reader 200 recognizes the RFID devices 210, 220, and 230 connected thereto. Referring to Figure 3, the RFID reader 200 sends an initializing instruction to the RFID devices 210, 220, and 230 (operation 300), and the RFID devices 210, 220, and 230, which are placed within the receiving range of the RFID reader 200, send their own chip IDs to the RFID reader 200 (operation 310). The RFID reader 200 distinguishes each of the RFID devices 210, 220, and 230 using the received chip IDs (operation 320). As a result, the RFID reader 200 can access each of the RFID devices 210, 220, and 230 using the chip IDs (operation 330).

Figure 4 is a flowchart illustrating how the RFID reader 200 and the RFID devices 210, 220, and 230 operate. The RFID reader 200 respectively distinguishes the RFID devices 210, 220, and 230, and then separately accesses and controls the RFID devices 210, 220, and 230. Referring to Figure 4, the RFID reader 200 sends a select instruction along with an RFID chip ID (operation 400) to the RFID devices 210, 220, and 230. Then, an RFID device corresponding to the chip ID responds to the select instruction and prepares for the next operation (operation 410). For example, if the RFID reader 200 sends a read/write instruction after the select instruction, the RFID device that receives the select instruction performs the read/write operation (operation 420). When the read/write operation is completed, the RFID reader 200 sends a deselect instruction, so that other RFID devices can receive a select instruction (operation 430).

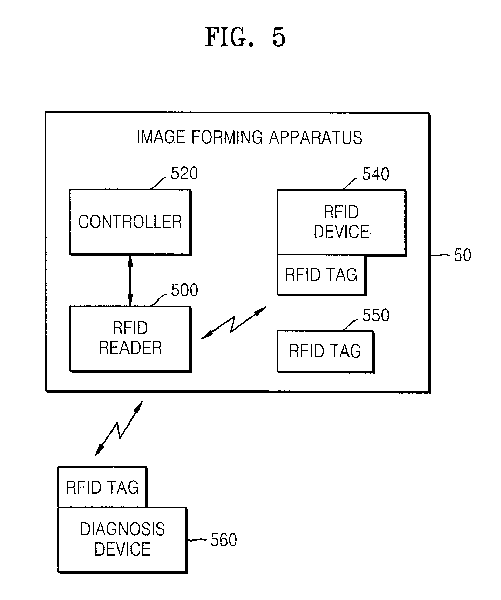

Figure 5 is a block diagram of a configuration of a diagnosis system for an image forming apparatus 50, according to an exemplary embodiment of the present invention. The diagnosis system includes an RFID reader 500, a diagnosis device 560, an RFID tag 550, and a controller 520.

The RFID tag 550 is included in the image forming apparatus 50. The RFID reader 500 is placed in the image forming apparatus 50. When the RFID reader 500 reads a diagnosis instruction from an RFID tag of the diagnosis device 560, the RFID reader 500 recognises the RFID tag 550 attached to the image forming apparatus 50 or an RFID tag attached to an RFID device 540, and communicates with the RFID device 540 to send or receive diagnosis information. More specifically, the RFID reader 500 may directly recognize the RFID tag 550, or may send an initiating instruction to the RFID device 540 including its RFID tag and receive the chip ID of the RFID device 540 to recognize the RFID device 540. When the RFID device 540 is recognized, the RFID reader 500 sends the selection instruction for the RFID device 540 along with the chip ID. Also, the RFID reader 500 sends an instruction to the controller 520 to be executed by the RFID device 540, and reads a result obtained by executing the instruction.

The diagnosis device 560 includes its own RFID tag for communicating with the RFID reader 500. The diagnosis device 560 stores a diagnosis instruction in its RFID tag, and receives a result obtained by execution of the diagnosis instruction. The controller 520 executes the diagnosis instruction received by the RFID reader 500, and sends the result thereof to the RFID reader 500. Also, the controller 520 controls the RFID reader 500 to read the result thereof from the appropriate RFID tag. The RFID device 540 may include a memory. Also, the RFID device 540 may be a consumable device (in other words, a toner cartridge or an OPC drum) in the image forming apparatus 50.

The RFID tag 550 may be separately included in the image forming apparatus 50 and store diagnosis information. The RFID reader 500 may read the diagnosis information stored in the RFID tag 550, and write the diagnosis information into the RFID tag of the diagnosis device 560.

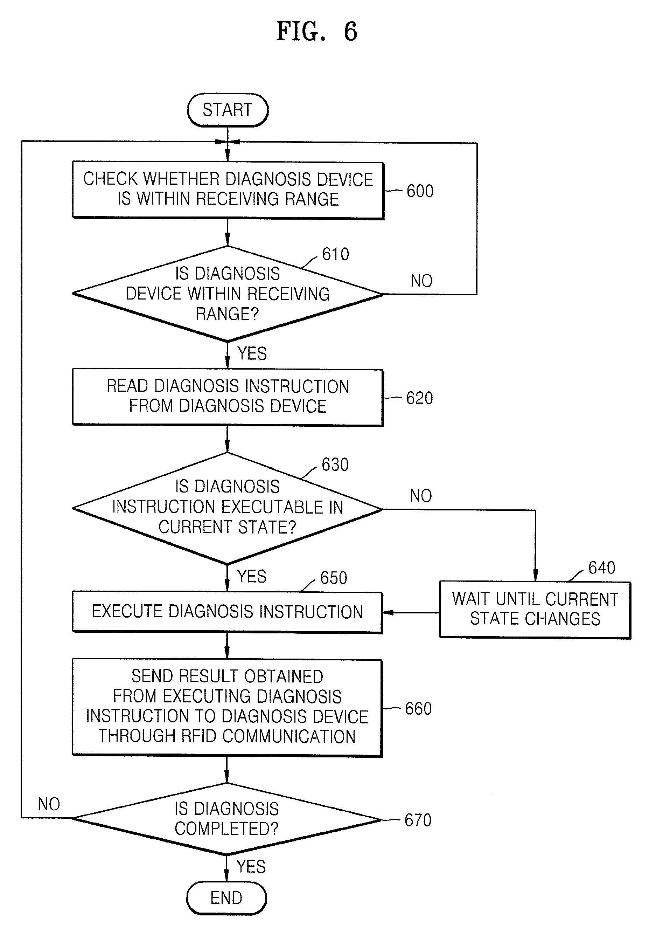

Figure 6 is a flowchart of a method of diagnosing the image forming apparatus 50 according to an exemplary embodiment of the present invention. A diagnosis system and a method therefor will now be described with reference to Figures 5 and 6.

First, the RFID reader 500 placed in the image forming apparatus 50 checks whether the diagnosis device 560 including its own RFID tag is within the receiving range (operation 600). If the diagnosis device 560 is within the receiving range (operation 610), a diagnosis instruction is read from the diagnosis device 560 through RFID communication (operation 620). Then, it is checked whether the diagnosis instruction is executable in the current state of the image forming apparatus 50 (operation 630). If the diagnosis instruction is executable in the current state, the diagnosis instruction is executed (operation 650). If the diagnosis instruction is not executable in the current state, the diagnosis instruction is not executed until the state of the image forming apparatus 50 changes (operation 640).

When the diagnosis instruction is executed, the result obtained by executing the diagnosis instruction is sent to the RFID tag of the diagnosis device 560 through RFID communication (operation 660). Whether the diagnosis is completed is checked (operation 670), and if the diagnosis is not completed, operation 600 is resumed.

The process of performing the diagnosis instruction will now be described. If diagnosis information is related to the RFID device 540 including its own RFID tag, the RFID device 540 is detected. For detecting the RFID device 540, the RFID reader 500 placed in the image forming apparatus 50 sends an initializing instruction to RFID devices including their own RFID tags, and then the RFID devices within the receiving range of the RFID reader 500 send their chip IDs to the diagnosis device 560. Then, the diagnosis information of the image forming apparatus 50 is received from the RFID device 540.

More specifically, if it is detected that the diagnosis device 560 is within the receiving range of the RFID reader 500 even when the image forming apparatus 50 is operating, the diagnosis operation is performed. First, whether the diagnosis device 560 is within the receiving range of the RFID reader 500 for the image forming apparatus 50 is checked. The image forming apparatus 50 periodically sends the initializing instruction to check whether the diagnosis device 560 is within the receiving range of the RFID reader 500. This can be checked using the received chip IDs as described with reference to Figure 3. If it is detected that the diagnosis device 560 is within the receiving range of the RFID reader 500, an instruction to be executed is read from the diagnosis device 560.

If the operation to be executed is not executable in the current state of the image forming apparatus 50, for example, an instruction for outputting a test pattern is sent while another printing job is being performed, the operation is not executed until the state of the image forming apparatus 50 changes for executing the operation. If the operation is executable in the current state, for example, reading the lifespan or state of the image forming apparatus 50, the operation is executed immediately. When the operation is completed, it is checked whether a next operation has to be executed. If there is no next operation to be executed, the diagnosis operation is completed.

A diagnosis example using the exemplary method and apparatus for diagnosing an image forming apparatus of the present invention will be now described.

### 1. LCD panel test for a printer

An instruction for testing an LCD panel is input to the RFID tag of the diagnosis device. The instruction is read by an RFID reader mounted in a printer, and a certain character or pattern is displayed on the LCD panel. A result obtained by executing the test instruction is written to the RFID tag of the diagnosis device, so that the diagnosis device recognizes the result.

### 2. Motor operation test

An instruction for testing a motor operation is input to the RFID tag of the diagnosis device. The instruction is read by an RFID reader of a printer in order to operate each motor of the printer. A result obtained from executing the test instruction is written to the RFID tag of the diagnosis device, so that the diagnosis device recognizes the result.

### 3. Scanner operation test

An instruction for testing a scanner operation is input to the RFID tag of the diagnosis device. The instruction is read by a multi-function printer to in order to operate a charge coupled device (CCD) or a contact image sensor (CIS) of the scanner, or to turn on or off a lamp of the scanner. A result obtained from executing the test instruction is written to the RFID tag of the diagnosis device, so that the diagnosis device recognizes the result there.

### 4. External communication port operation test

An instruction for testing an external communication port is input to the RFID tag of the diagnosis device. The instruction is read by a multi-function printer in order to perform the operation test for each external communication port. In the case of an LPT port, specific data is sent or received to and from the LPT port. In the case of a USB port, it is checked whether the USB port can communicate with a USB host. In the case of a fax machine, a specific pattern is sent or received by a fax number. In the case of a network, a test is performed using a ping operation or a test packet. A result obtained from executing the test instruction is written to the RFID tag of the diagnosis device so that the diagnosis device recognizes the result there.

### 5. Consumable device information check

An instruction for checking consumable device information is input to the RFID tag of the diagnosis device. The instruction is read by a printer in order to check the information of each consumable device. The information is written into the RFID tag of the diagnosis device so that the diagnosis device can check the information of the consumable device.

### 6. Printer information check

An instruction for checking printer information is input to the RFID tag of the diagnosis device. The instruction is read by a printer in order to check system information of the printer (in other words, a lifespan, a F/W version, a menu setting value, manufacturing information, a repair history and the like). The information is written to the RFID tag of the diagnosis device, so that the diagnosis device checks the information of the printer.

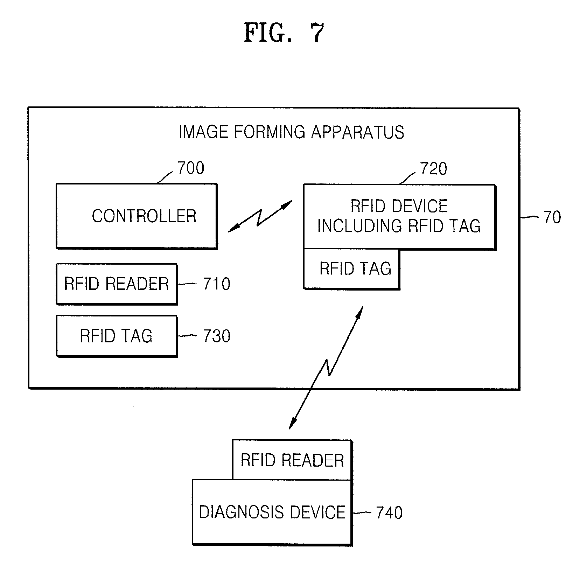

Figure 7 is a block diagram of a configuration of a diagnosis system for an image forming apparatus 70 according to another exemplary embodiment of the present invention. The diagnosis system includes at least one RFID device 720, a diagnosis device 740, an RFID reader 710, an RFID tag 730, and a controller 700.

The RFID device 720 is placed in an image forming apparatus 70, and stores information required for diagnosing the image forming apparatus 70. An RFID tag is attached to the RFID device 720. The diagnosis device 740 includes its own RFID reader for RFID communication so as to recognize the RFID device 720 or the RFID tag 730, read diagnosis information stored in the RFID tag of the RFID device 720, and store diagnosis information into the RFID tag of the RFID device 720 or the RFID tag 730. Through the RFID reader 710, the control unit 700 stores the diagnosis information of the image forming apparatus 70 into the RFID tag of the RFID device 720 or the RFID tag 730, reads the diagnosis instruction stored in the RFID device 720 or the RFID tag 730, and executes the diagnosis instruction. The RFID reader 710 may be attached to the controller 700 or the image forming apparatus 70, and may communicate with the RFID tag 730 or the RFID device 720 through RFID communication. The RFID tag 730 is attached to the image forming apparatus 70.

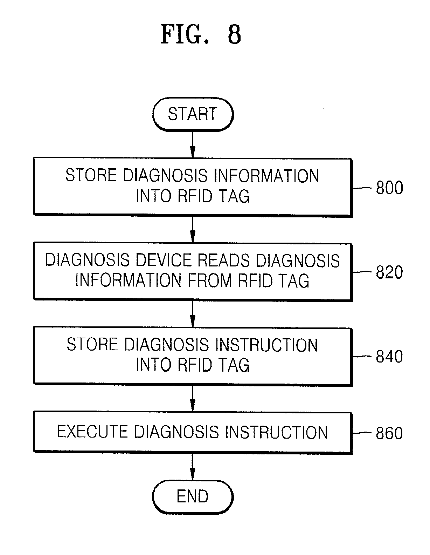

Figure 8 is a flowchart of a diagnosis method for the image forming apparatus 70 according to another exemplary embodiment of the present invention. A diagnosis system for the image forming apparatus 70 and a method therefor according to an exemplary embodiment of the present invention will be now described with reference to Figures 7 and 8. Diagnosis information of the image forming apparatus 70 is stored in the RFID device 720 including its own RFID tag or the RFID tag 730 of the image forming apparatus 70 (operation 800). The diagnosis device 740 reads the diagnosis information of the image forming apparatus 70 from the RFID device 720 or the RFID tag 730 of the image forming apparatus 70 (operation 820). Through RFID communication, the diagnosis device 740 recognizes the RFID device 720 or the RFID tag 730 of the image forming apparatus 70, and stores the diagnosis instruction into the RFID tag of the recognized RFID device 720 or the RFID tag 730 of the image forming apparatus 70 (operation 840). The diagnosis instruction stored in the RFID tag of the RFID device 720 or the RFID tag 730 of the image forming apparatus 70 is read and executed (operation 860).

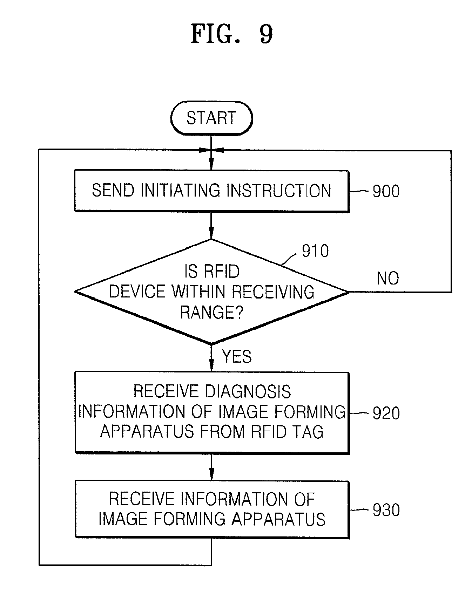

Figure 9 is a flowchart illustrating how a diagnosis device recognizes an RFID device placed in a printer and receives printer information. First, the diagnosis device checks whether the RFID device is within the receiving range. For this, the diagnosis device sends periodically an initiating instruction (operation 900), and checks whether the RFID device is within the receiving range (operation 910) using a chip ID received as described with reference to Figure 3.

If the RFID device is within the receiving range, the diagnosis device receives information stored in the RFID device (operation 920). The RFID device is placed in consumable devices, such as a toner cartridge or an OPC drum, placed in the printer.

After the diagnosis device receives the diagnosis information (operation 930), operation 900 is resumed.

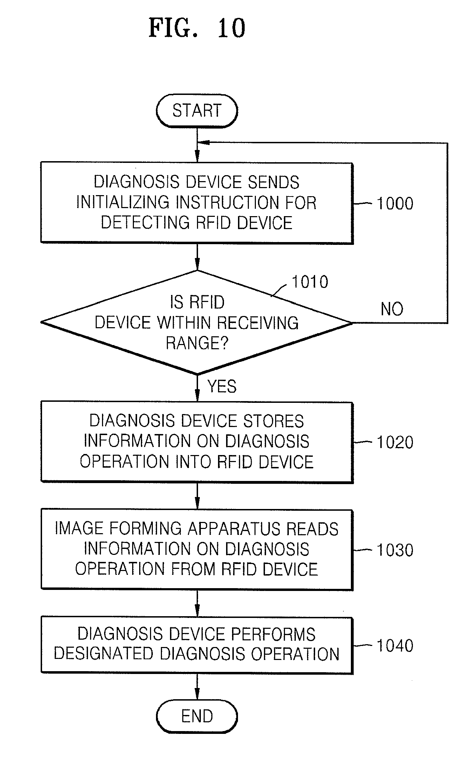

Figure 10 is a flowchart illustrating how a diagnosis device stores information on diagnosis operations into an RFID device placed in an image forming device and how the image forming device receives the information and performs corresponding operations. First, the diagnosis device sends an initializing instruction to detect an RFID device (operation 1000). If the RFID device is within the receiving range of the diagnosis device (operation 1010), the diagnosis device stores information on diagnosis operations into the RFID device placed in consumable devices, such as a toner cartridge or an OPC drum, placed in the image forming device (operation 1020). The image forming device reads the information stored in the RFID device (operation 1030).

When a corresponding operation is ready to be performed, the corresponding operation is performed (operation 1040). The RFID device may be a consumable device of an image forming apparatus.

Accordingly, in the present invention, since several devices can be connected to one RFID reader, the image forming apparatus checks periodically the existence of the diagnosis device through RFID communication, so that, when the diagnosis device is within the range of the RFID reader, a diagnosis operation executable in the current state of the image forming apparatus is performed.

The above described diagnosis examples used in a first exemplary embodiment of the present invention may be also used in a second embodiment of the present invention, and this will be easily understood by those skilled in the art. Thus, detailed description thereof will be omitted, and only an LCD panel test for a printer will be described.

The LCD panel test for a printer is performed as follows. An RFID reader for a diagnosis device inputs an instruction for testing the LCD panel to the RFID tag of the diagnosis device. The instruction is read by an RFID reader of the printer and a certain character or pattern is displayed on the LCD panel. A result obtained by executing the test instruction is stored into the RFID tag of the printer. The RFID reader of the diagnosis device reads the RFID tag of the printer, so that the diagnosis device recognizes the result there.

In an image forming apparatus having a diagnosis function using the RFID, and a diagnosis system and method therefor according to the present invention, an additional port for the diagnosis function is not required, and diagnosis can be performed by connecting the image forming apparatus with a diagnosis device even when the image forming apparatus operating.

Therefore, when a network printer or a server printer used by multi-users has to be diagnosed, even though another job is being performing, it is not necessary to wait until the job is completed. In addition, since an USB port or a print port is not used, a user can use the image forming apparatus while the diagnosis is being performed, thereby allowing a user to conveniently perform a maintenance operation of the image forming apparatus.

The embodiments of the present invention can be written as computer readable codes on computer readable medium. The computer readable recording medium is any data storage device that can store data which can be thereafter read by a computer system. Examples of the computer readable recording medium include read-only memory (ROM), random-access memory (RAM), CD-ROMS, magnetic tapes, floppy disks, and optical data storage devices.

While the present invention has been particularly shown and described with reference to exemplary embodiments thereof, it will be understood by those skilled in the art that various changes in form and details may be made therein without departing from the scope of the present invention as defined by the appended claims.

## Claims

1. A method of communicating diagnosis information relating to an image forming apparatus, the method comprising:
communicating the information from the image forming apparatus to a diagnosis device using an RFID tag and an RFID reader.

2. A method according to claim 1, wherein communicating the information comprises:
receiving the information, from the image forming apparatus, at a radio frequency identification RFID tag; and
reading the information from the RFID tag.

3. A method according to claim 1 or 2, wherein the information is received via wireless RFID communication at the RFID tag.

4. A method according to claim 1, 2 or 3, further comprising:
reading a diagnosis instruction from the diagnosis device via an RFID reader located in the image forming apparatus;
diagnosing the image forming apparatus using the read diagnosis instruction; and
sending a diagnosis result to the diagnosis device through RFID communication.

5. A method according to claim 4, wherein reading a diagnosis instruction further comprises determining whether the diagnosis device is within the receiving range of the RFID reader located in the image forming apparatus.

6. A method according to claim 4 or 5, wherein diagnosing the image forming apparatus further comprises diagnosing an RFID device if the diagnosis instruction is related to the RFID device including its RFID tag, and the RFID reader placed in the image forming apparatus reads the diagnosis result.

7. A method according to claim 4, 5 or 6, wherein reading a diagnosis instruction from a diagnosis device comprises reading a diagnosis instruction from an RFID tag of the diagnosis device.

8. A method according to any one of claims 4 to 7, wherein the RFID device including the RFID tag is a component device of the image forming apparatus.

9. A method according to claim 1 or 2, wherein the information is read from the RFID tag via wireless RFID communication.

10. A method according to claim 9, further comprising:
recognizing an RFID tag of an image forming apparatus through RFID communication by a first RFID reader;
storing a diagnosis instruction on the recognized RFID tag by the first RFID reader; and
diagnosing the image forming apparatus using the diagnosis instruction.

11. A method according to claim 10, wherein a second RFID reader reads the diagnosis instruction stored on the recognized RFID tag, and the RFID communication is a series of operations through which the first or second RFID reader reads data stored in the RFID tag or writes data to the RFID tag.

12. A method according to claim 11, wherein the RFID tag of the image forming apparatus is attached to an RFID device included in the image forming apparatus.

13. A method according to claim 11 or 12, further comprising:
storing a diagnosis result on the RFID tag of the image forming apparatus using the second RFID reader; and
reading the diagnosis result of the image forming apparatus from the RFID tag of the image forming apparatus using the first RFID reader.

14. An image forming apparatus comprising:
means for sending diagnosis information for the image forming apparatus to a diagnosis device via a radio frequency identification RFID tag.

15. An image forming apparatus according to claim 14, wherein said sending means comprises an RFID reader.

16. An image forming apparatus according to claim 15, wherein the RFID tag comprises an RFID tag of a diagnosis device and wherein the RFID reader is configured to read a diagnosis instruction from the RFID tag of the diagnosis device, receive a result obtained by executing the diagnosis instruction, and send or receive diagnosis information respectively to and from the RFID tag of the diagnosis device; and
further comprising:
a controller which performs the diagnosis instruction received by the RFID reader and sends the diagnosis result to the RFID reader.

17. An image forming apparatus according to claim 16, further comprising an RFID tag attached to an RFID device included in the image forming apparatus.

18. An image forming apparatus according to claim 17, wherein the RFID device including the RFID tag is a component device of the image forming apparatus.

19. An image forming apparatus according to claim 17 or 18, wherein the RFID reader recognizes the RFID tag attached to the RFID device by sending an initiating instruction and receiving a chip ID of the RFID tag attached to the RFID device.

20. An image forming apparatus according to claim 19, wherein the RFID reader sends an instruction for selecting the RFID device and an instruction to be executed by the RFID device along with the chip ID, and reads a result obtained by executing the instructions.

21. An image forming apparatus according to claim 14, wherein the RFID tag is an RFID tag associated with the image forming apparatus.

22. An image forming apparatus according to claim 21, further comprising:
an RFID reader configured to read and write the information from and to the RFID tag; and
a controller which causes the RFID reader to write the information to the RFID tag , wherein a diagnosis device reads the diagnosis information stored in the RFID tag by recognizing the RFID tag of the image forming apparatus and stores a diagnosis instruction into the RFID tag, and wherein the controller reads the diagnosis instruction stored in the RFID tag of the image forming apparatus, executes the diagnosis instruction, and stores an execution result into the RFID tag via the RFID reader.

23. An image forming apparatus according to claim 22, wherein the RFID tag is attached to an RFID device included in the image forming apparatus.

24. A system, comprising:
an image forming apparatus according to any one of claims 14 to 20; and
a diagnosis device which includes the RFID tag, stores a diagnosis instruction in the RFID tag, and receives a diagnosis result; wherein the RFID reader reads the diagnosis instruction from the RFID tag of the diagnosis device, and sends and receives diagnosis information by recognizing the RFID tag of the diagnosis device.

25. A system, comprising:
an image forming apparatus according to claim 21, 22 or 23; and
a diagnosis device which includes an RFID reader, recognizes the RFID tag to read the diagnosis information stored in the recognized RFID tag, and stores a diagnosis instruction onto the recognized RFID tag.
